# DEMANDE DE BREVET EUROPEEN

(11) **EP 1 260 132 A1**
(43) Date de publication de la demande: **27.11.2002**
(21) Numéro de dépôt: 01401293.4
(22) Date de dépôt: 17.05.2001
(51) Int. Cl.: A01D 47/00, A01D 45/16, A01D 57/22, A24B 1/00

(54) **Dispositif de fauchage des végétaux**

(71) Demandeur: Etablissement Mouret Thierry, 47160 Puch d'Agenais (FR)
(72) Inventeur: Mouret, Thierry D., 47160 Puch d'Agenais (FR)
(74) Mandataire: Dronne, Guy

(57) **Abrégé**

L'invention concerne un dispositif de fauchage de végétaux comportant des tiges aériennes, attelable sur un engin automoteur. Le dispositif comprend, un premier châssis (2) comportant des moyens de guidage (6, 4) convergeant vers des premiers moyens de coupe (10) pour ménager une encoche dans lesdites tiges (8) et des deuxièmes moyens de coupe (18) pour sectionner lesdites tiges (8) au-dessous de ladite encoche, lesdits moyens de coupe (10, 18) et lesdits moyens de guidage (6, 4) étant fixés sur ledit premier châssis (2) dans des positions relatives déterminées. Le dispositif comprend également un deuxième châssis apte à être fixé sur une partie dudit engin automoteur, et des moyens de liaison pour relier les deux châssis de sorte que ledit premier châssis (2) peut être écarté d'une position d'équilibre selon une direction sensiblement perpendiculaire à la direction d'avancement dudit engin automoteur, ledit premier châssis (2) étant guidé par lesdites tiges (8) sur lesquelles lesdits moyens de guidage (6, 4) prennent appui, par quoi la position relative desdits premiers moyens de coupe (10) et desdites tiges est constante.

## Description

La présente invention concerne un dispositif de fauchage de végétaux comportant des tiges aériennes, attelable sur un engin automoteur.

Un domaine d'application de l'invention est notamment, mais non exclusivement, celui du fauchage des pieds de tabac.

Des dispositifs de fauchage attelables sur un engin automoteur sont bien connus, notamment les faucheuses comportant deux lames de scies parallèles et superposées sur lesquelles sont fixées des dents de scie. Le mouvement alternatif des deux lames de scie selon leur axe longitudinal provoque le croisement des dents qui permet de couper.

On connaît également des faucheuses dont la barre de coupe est constituée de disques contigus en rotation dans un plan parallèle au sol. La périphérie des disques présente des dents susceptibles de couper lorsque les disques sont en rotation rapide.

Les deux dispositifs précités sont susceptibles d'être attelés sur un engin automoteur comportant des moyens pour actionner les mécanismes de coupe et le fauchage des végétaux est effectué par déplacement de la faucheuse sur l'espace de culture du végétal.

Pour certaines plantes cultivées en rangs, qui sont suspendues lors de l'opération de séchage, il est nécessaire, au moment de la récolte, de réaliser une encoche dans la tige à proximité du pied, de manière à utiliser cette encoche pour accrocher la plante. Cependant, l'extrême précision que requiert cette opération est difficilement compatible avec les dispositifs de fauchage actuels puisque la précision avec laquelle l'encoche doit être ménagée, par un outil de coupe fixé sur le dispositif de fauchage qui est lui-même fixé à l'engin automoteur, est bien inférieure à la précision de manoeuvre de l'engin par rapport à la plante.

Un objet de la présente invention est de proposer un dispositif de fauchage attelable apte à ménager une encoche de profondeur et de forme constantes sur la tige des plantes à récolter, et à les faucher simultanément.

Pour atteindre ce but, conformément à l'invention, le dispositif de fauchage, attelable sur un engin automoteur, comprend :
- un premier châssis comportant des moyens de guidage convergeant vers des premiers moyens de coupe pour ménager une encoche dans lesdites tiges et des deuxièmes moyens de coupe pour sectionner lesdites tiges au-dessous de ladite encoche, lesdits moyens de coupe et lesdits moyens de guidage étant fixés sur ledit premier châssis dans des positions relatives déterminées,
- un deuxième châssis apte à être fixé sur une partie dudit engin automoteur, et,
- des moyens de liaison pour relier les deux châssis de sorte que ledit premier châssis peut être écarté d'une position d'équilibre selon une direction sensiblement perpendiculaire à la direction d'avancement dudit engin automoteur, ledit premier châssis étant guidé par lesdites tiges sur lesquelles lesdits moyens de guidage prennent appui, par quoi la position relative desdits premiers moyens de coupe et desdites tiges est constante.

On comprend que les premiers moyens de coupe réalisent l'encoche en étant guidés indirectement par la tige de la plante elle-même.

Le dispositif de fauchage est attelé sur l'engin automoteur de manière à ce que le premier châssis, qui est monté mobile sur le deuxième châssis, soit en équilibre au droit du rang de végétaux à couper.

Lorsque l'engin automoteur avance parallèlement au rang à côté de celui-ci, les tiges des végétaux exercent sur les moyens de guidage qui convergent vers les premiers moyens de coupe, une force qui est de nature à déplacer transversalement le premier châssis par rapport au second.

Ainsi les premiers moyens de coupe dont le déplacement est provoqué par l'avancement de l'engin automoteur sont amenés dans une position relative constante par rapport aux tiges, ce qui engendre un trait de coupe, réalisant l'encoche, identique dans toutes les tiges quelles que soient leurs positions par rapport à l'engin automoteur.

Lorsque l'encoche est réalisée, des deuxièmes moyens de coupe fixés sur le premier châssis sectionnent la tige au-dessous de l'encoche et le végétal se couche sur le sol.

Le trait de coupe est ménagé plus précisément dans les tiges si, avantageusement, lesdits moyens de guidage comprennent, en regard desdits premiers moyens de coupe, des moyens élastiques aptes à appliquer lesdites tiges contre le bord desdits moyens de guidage sur lequel sont fixés lesdits premiers moyens de coupe.

Afin que les moyens de guidage s'adaptent à toutes les tailles de tige, on prévoit que les moyens de guidage se prolongent, dans la partie convergente, par des moyens élastiques qui appliquent la partie de tige dans laquelle est ménagée l'encoche contre le bord opposé à celui comportant les moyens élastiques, qui comprend les premier moyens de coupe. Ainsi la profondeur de l'encoche, déterminée par la distance qui sépare les premiers moyens de coupe du bord des moyens de guidage, est-elle constante.

Selon une particularité avantageuse du dispositif de fauchage lesdits moyens de liaison comportent un premier profilé fixé audit premier châssis et un deuxième profilé horizontal fixé audit deuxième châssis dans une direction sensiblement perpendiculaire à la direction d'avancement dudit engin automoteur et ledit premier profilé est maintenu parallèle et à l'aplomb dudit deuxième profilé par au moins deux ensembles de biellettes dont chaque première extrémité est montée pivotante sur ledit premier profilé et dont chaque deuxième extrémité est montée pivotante sur ledit deuxième profilé de manière à constituer un parallélogramme déformable.

On comprend que le premier châssis est suspendu au deuxième châssis par l'intermédiaire de deux profilés parallèles et d'un ensemble de biellettes constituant un parallélogramme déformable. Le deuxième profilé étant fixé sur le deuxième châssis dans une direction sensiblement perpendiculaire à la direction d'avancement dudit engin automoteur, et le premier châssis étant fixé sur le premier profilé, ledit premier châssis comportant les moyens de coupe et de guidage est susceptible d'osciller dans le plan vertical sensiblement perpendiculaire à la direction d'avancement dudit engin automoteur de manière à s'adapter à la position latérale des tiges par rapport audit engin.

Pour adapter la hauteur de coupe de la tige, selon une autre particularité du dispositif de fauchage conforme à l'invention, ledit deuxième châssis comprend en outre des moyens d'appui sur le sol situés à l'aplomb dudit premier châssis par quoi la hauteur dudit premier châssis par rapport au sol est sensiblement constante,

En effet, la hauteur de coupe est théoriquement déterminée par la position verticale de l'engin automoteur par rapport à la tige, puisque la position du premier châssis est, à l'équilibre, fixée verticalement par rapport audit engin. Or, dans le cas où le terrain est bosselé il est souhaitable que la hauteur de coupe ne soit pas tributaire des mouvements dudit engin automoteur, mais soit fonction d'un moyen d'appui du deuxième châssis, prenant appui sur le sol à proximité du pied des tiges et à l'aplomb des moyens de coupe.

Préférentiellement, ces derniers comprennent des scies circulaires actionnées par un moteur hydraulique.

Ce dernier, facile à mettre en oeuvre et peu encombrant, est actionné par de l'huile sous pression provenant d'une première conduite flexible reliée à l'engin automoteur, le retour d'huile s'effectuant par une deuxième conduite.

D'autres particularités et avantages de l'invention ressortiront à la lecture de la description faite ci-après, à titre indicatif mais non limitatif, en référence aux dessins annexés sur lesquels :
- la Figure 1 est une vue schématique en élévation de dessus du premier châssis comprenant les moyens de coupe et les moyens de guidage,
- la Figure 2 est une vue schématique en coupe selon le plan II-II de la Figure 1,
- la Figure 3 est une vue schématique partielle de dessus du premier châssis fixé au premier profilé, et,
- la Figure 4 est une vue schématique partielle en perspective des moyens de liaison reliant le premier et le deuxième châssis.

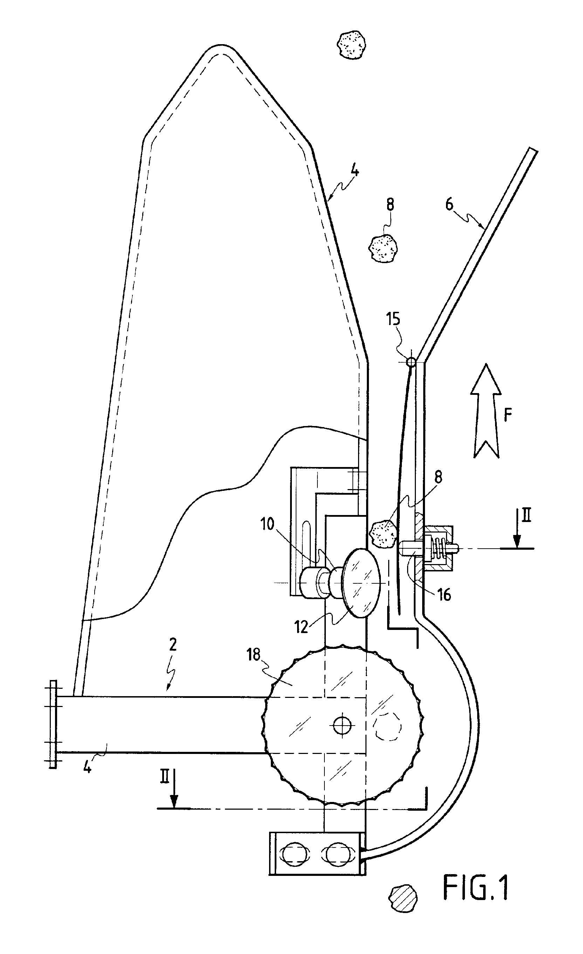

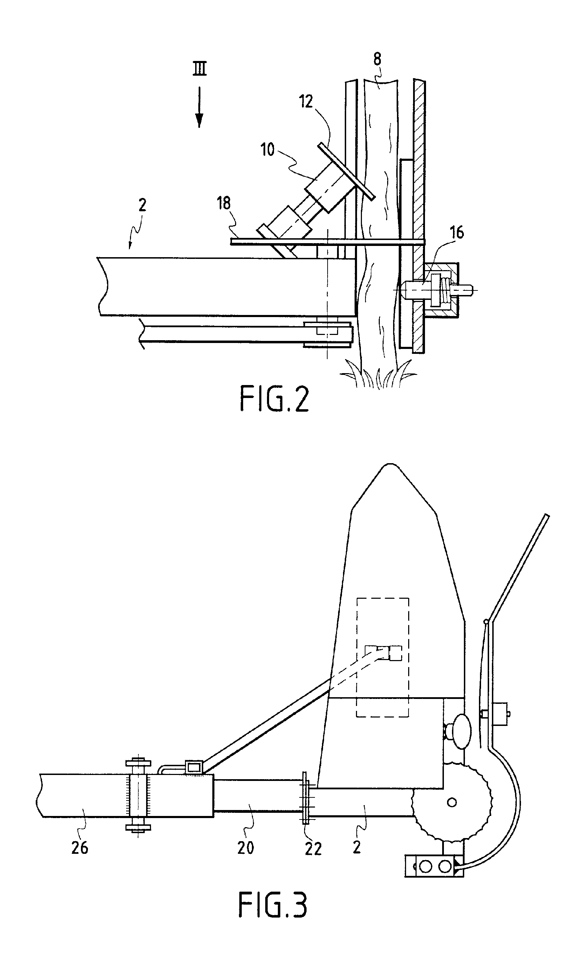

En se référent tout d'abord à la Figure 1 et à la Figure 2, on va décrire le premier châssis dans sa position de fonctionnement.

Le premier châssis 2 comporte des moyens de guidage 4, 6 formant un V qui s'appuient contre les tiges des végétaux 8 au cours de l'avancement du châssis 2 dans le sens de la flèche F.

Les moyens de guidage 4, 6, convergent vers un premier moyen de coupe 10 fixé sur le premier châssis 2 à proximité du bord 4 des moyens de guidage. Comme on peut le voir sur la Figure 2, les moyens de coupe 10 sont constitués d'un disque coupant 12 dont l'axe de rotation, perpendiculaire au bord 4, est incliné par rapport au plan du châssis 2 permettant de ménager un trait de coupe en biseau dans la tige 8.

Dans le prolongement des moyens de guidage 6, au regard des premiers moyens de coupe 10, sont fixés des moyens élastiques comprenant une plaque 14, articulée à l'une de ses extrémités 15, et appliquée contre un dispositif 16 apte à comprimer un ressort dans l'extrémité opposée. Au repos, lorsque le ressort n'est pas comprimé, la plaque 14 converge vers le disque de coupe 12 de sorte que la distance qui sépare les deux bords opposés 4, 6 des moyens de guidage est inférieure au diamètre des tiges 8. Ainsi, lorsque la tige 8 traverse les moyens de guidage 4, 6, la plaque 14 se rabat en comprimant le dispositif 16 et en appliquant une force transversale sur la tige 8 tendant à la comprimer vers le bord 4 des moyens de guidage comprenant les moyens de coupe 10.

Comme on peut le voir sur la Figure 1, le châssis 2 comporte, dans le prolongement des moyens de guidage 4, 6, derrière les premiers moyens de coupe, des deuxièmes moyens de coupe comprenant un disque coupant 18 dont la largeur de coupe est supérieure à la distance qui sépare les bords 4, 6 des moyens de guidage au niveau des premiers moyens de coupe 10.

Le disque coupant 18 est parallèle au plan du châssis 2 et, tel qu'il apparaît sur la Figure 2, il est situé en dessous du niveau auquel se trouvent les moyens de coupe 10 de manière à ce que l'encoche soit ménagée dans la partie supérieure de la tige du végétal.

Les disques coupants sont entraînés en rotation par un moteur hydraulique principal, non représenté, entraînant directement l'axe des deuxièmes moyens de coupe, et indirectement par l'intermédiaire d'une courroie, l'axe des premiers moyens de coupe.

On retrouve sur la Figure 3, le châssis 2 tel que représenté sur la Figure 1, fixé à un premier profilé 20 au moyen d'une plaque de fixation 22.

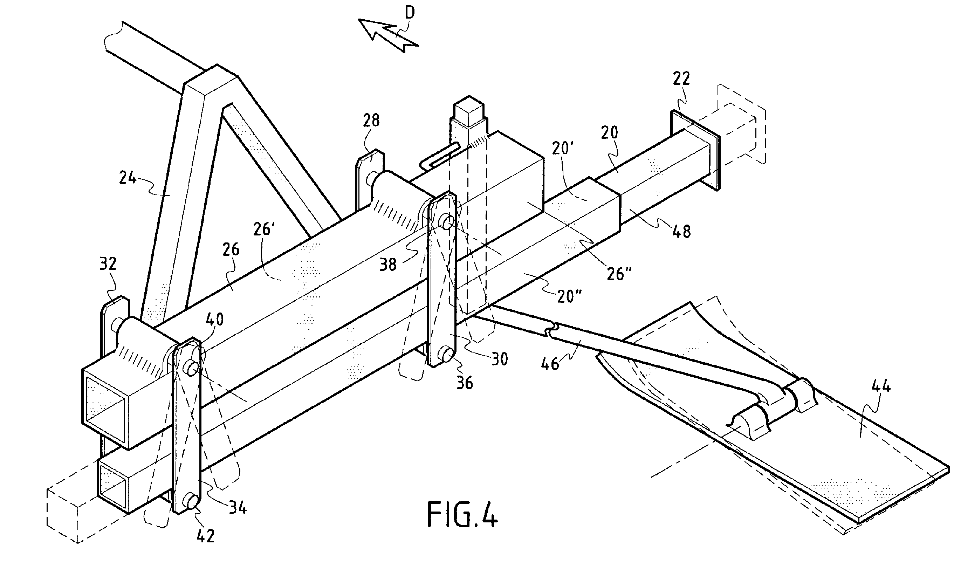

On se réfère maintenant à la Figure 4 à l'aide de laquelle on va décrire le mode de liaison du premier châssis 2 à un deuxième châssis 24.

Le deuxième châssis 24, fixé à une partie de l'engin automoteur qui l'entraîne dans le sens de la flèche D, comporte un deuxième profilé 26, monté horizontalement et perpendiculaire à la direction d'avancement dudit engin automoteur. Le premier profilé 20, solidaire du premier châssis 2, est maintenu à l'aplomb du deuxième profilé 26 et parallèlement à ce dernier par un ensemble de biellettes 28, 30, 32, 34. Chaque première extrémité de ces biellettes 28, 30, 32, 34 est montée pivotante sur le premier profilé 20, et chaque deuxième extrémité est également montée pivotante sur le deuxième profilé 26.

Généralement les biellettes 28, 30, 32, 34 sont associées par deux et sont montées en regard l'une de l'autre, de manière à ce que leurs pivots 36, 38, 40, 42 soient communs. Les biellettes 28 et 30, respectivement appliquées sur les parois avant 26', 20' et sur les parois arrière 26", 20" des profilés, sont montées sur un premier pivot commun 38 fixé dans la partie supérieure du deuxième profilé 26 et sur un deuxième pivot commun 36 fixé sous le profilé 20. Les biellettes 32 et 34 ont également un premier pivot commun 40 fixé dans la partie supérieure du deuxième profilé 26 et un deuxième pivot commun 42 fixé sous le profilé 20. Ainsi les deux profilés 20 et 26, maintenus parallèles entre eux par les deux paires de biellettes 28, 30 et 32, 34, constituent un parallélogramme déformable, permettant au profilé 20 sur lequel est fixé le premier châssis 2, d'osciller selon une direction parallèle au deuxième profilé et par conséquent perpendiculairement à la direction d'avancement de l'engin automoteur.

Au repos, le premier profilé 20 situé en dessous du deuxième profilé 26, est dans une position telle que les biellettes 28, 30, 32, 34, sont perpendiculaires aux deux profilés 20, 26. Lorsque le premier profilé 20 est écarté de cette position de repos, par gravité un couple de rappel antagoniste tend à le ramener à cette position.

Ainsi, les écarts de trajectoire de l'engin automoteur par rapport aux pieds et aux tiges 8 des végétaux sont compensés par un écartement du premier châssis 2 par rapport audit engin, puisque le premier châssis 2 est guidé par les tiges 8 des végétaux.

Un guidage vertical est également prévu, pour éviter que la hauteur de coupe varie de façon trop importante avec les irrégularités du terrain. Pour ce faire, le châssis 24 est libre en translation verticale par rapport à l'engin automoteur et il est guidé par des moyens de contact 44 avec le sol qui peuvent avoir différentes formes et notamment celle d'un patin. Les moyens de contact 44 sont entraînés sur le sol par l'engin automoteur. Pour diminuer les frottements induits, notamment lorsque le terrain est relativement humide, les moyens de contact peuvent être avantageusement constitués par une roue. Les moyens de contact 44 sont fixés au châssis 24 par l'intermédiaire du profilé 26, lui-même fixe par rapport au châssis, et par l'intermédiaire de moyens de liaison 46 réglables verticalement sur ledit profilé 26.

Les moyens de liaison 46 comprennent une tige afin que les moyens de contact 44 soient maintenus à proximité des tiges 8 des végétaux et à l'aplomb des moyens de coupe 10 et 18. Ainsi, la hauteur de coupe est relativement constante puisque la position verticale des moyens de coupe 10 et 18 est déterminée par les moyens de contact 44 avec le sol situés à proximité des tiges. Cette hauteur peut varier sensiblement, du fait de la variation de position horizontale du premier châssis 2 par rapport à l'engin automoteur, avec l'angle des biellettes 28, 30, 32, 34, par rapport à la verticale.

Selon un mode particulier de réalisation, non représenté, on prévoit, d'une part, un premier galet dont l'axe vertical est fixé sur la paroi arrière 26" du deuxième profilé 26, sur sa première extrémité la plus proche du premier châssis 2 de façon que le premier galet s'appuie sur la paroi arrière 20" du premier profilé 20 et, d'autre part, un deuxième galet dont l'axe vertical est fixé sur la paroi avant 26' du deuxième profilé 20 et sur sa deuxième extrémité de façon que le deuxième galet s'appuie sur la paroi avant 20' du premier profilé 20.

Le fait que les appuis sont constitués de galets ne freine pas le déplacement du premier profilé 20 par rapport au deuxième 26 et permet de compenser les efforts que subit le premier profilé 20 par l'intermédiaire du premier châssis 2, sous l'effet de l'impact des tiges.

Selon un autre mode particulier de réalisation, le premier profilé comprend des moyens télescopiques 48 qui permettent de régler la position horizontale du premier châssis 2 comportant les moyens de coupe 10, 18, par rapport à l'engin automoteur. Les moyens télescopiques comprennent bien évidemment des moyens de blocage non représentés.

L'invention n'est pas limitée à un dispositif de fauchage comprenant des moyens de liaison sous forme d'un parallélogramme déformable ; mais elle s'étend à tous moyens de liaison autorisant un déplacement orthogonal dudit premier châssis 2 par rapport à la direction d'avancement de l'engin automoteur, munis de moyens de rappel tendant à le ramener dans sa position de repos lorsqu'il en est écarté par les tiges de végétaux.

## Revendications

1. Dispositif de fauchage de végétaux comportant des tiges aériennes, attelable sur un engin automoteur, **caractérisé en ce qu'**il comprend :
- un premier châssis (2) comportant des moyens de guidage (6, 4) convergeant vers des premiers moyens de coupe (10) pour ménager une encoche dans lesdites tiges (8) et des deuxièmes moyens de coupe (18) pour sectionner lesdites tiges (8) au-dessous de ladite encoche, lesdits moyens de coupe (10, 18) et lesdits moyens de guidage (6, 4) étant fixés sur ledit premier châssis (2) dans des positions relatives déterminées,
- un deuxième châssis (24) apte à être fixé sur une partie dudit engin automoteur, et,
- des moyens de liaison pour relier les deux châssis (2, 24) de sorte que ledit premier châssis (2) peut être écarté d'une position d'équilibre selon une direction sensiblement perpendiculaire à la direction d'avancement dudit engin automoteur, ledit premier châssis (2) étant guidé par lesdites tiges (8) sur lesquelles lesdits moyens de guidage (6, 4) prennent appui, par quoi la position relative desdits premiers moyens de coupe (10) et desdites tiges est constante.

2. Dispositif de fauchage selon la revendication 1, **caractérisé en ce qu'**en outre lesdits moyens de guidage (6, 4) comprennent, en regard desdits premiers moyens de coupe (10), des moyens élastiques (14, 15, 16) aptes à appliquer lesdites tiges (8) contre le bord desdits moyens de guidage (4) sur lequel sont fixés lesdits premiers moyens de coupe (10).

3. Dispositif de fauchage selon la revendication 1 ou 2, **caractérisé en ce que** lesdits moyens de liaison comportent un premier profilé (20) fixé audit premier châssis et un deuxième profilé (26) horizontal fixé audit deuxième châssis (24) dans une direction sensiblement perpendiculaire à la direction d'avancement dudit engin automoteur et **en ce que** ledit premier profilé (20) est maintenu parallèle et à l'aplomb dudit deuxième profilé (26) par au moins deux ensembles de biellettes (28, 30, 32, 34) dont chaque première extrémité est montée pivotante sur ledit premier profilé (20) et dont chaque deuxième extrémité est montée pivotante sur ledit deuxième profilé (26) de manière à constituer un parallélogramme déformable.

4. Dispositif de fauchage selon l'une quelconque des revendications 1 à 3, **caractérisé en ce que** ledit deuxième châssis (24) comprend en outre des moyens d'appui (44) sur le sol situés à l'aplomb dudit premier châssis (2) par quoi la hauteur dudit premier châssis par rapport au sol est sensiblement constante.

5. Dispositif de fauchage selon l'une quelconque des revendications 1 à 4, **caractérisé en ce que** lesdits premiers et deuxièmes moyens de coupe (10, 18) comprennent une scie circulaire actionnée par un moteur hydraulique.
